# EUROPEAN PATENT APPLICATION

(11) **EP 1 954 042 A1**
(43) Date of publication of application: **06.08.2008**
(21) Application number: 06796720.8
(22) Date of filing: 24.08.2006
(51) Int. Cl.: H04N 5/91, G10L 11/00, G11B 27/034, H04N 5/76

(54) **NON-PROGRAM MATERIAL SCENE EXTRACTING DEVICE AND ITS COMPUTER PROGRAM**

(30) Priority: 30.09.2005 JP 2005287326
(71) Applicant: Pioneer Corporation, Tokyo 153-8654 (JP)
(72) Inventor: HASHIMOTO, Shinya, Saitama 350-2288 (JP); NAKAMURA, Harumi, Saitama 350-2288 (JP)
(74) Representative: Haley, Stephen
(86) International application number: PCT/JP2006/316607
(87) International publication number: WO 2007/039998

(57) **Abstract**

The present invention is directed to provide a non-program material scene extracting device and a computer program thereof that ensure extraction of a non-program material scene in a content.

The non-program material scene extracting device includes a content acquiring section 20 for acquiring a content including audio information, a low sound pressure segment searching unit 41 for searching all content segments along the time axis of the acquired content for a low sound pressure segment where a sound pressure level calculated based on the audio information is at or below a predetermined low sound threshold value, and a non-program material scene extracting unit 32 for extracting a non-program material scene including a commercial scene from all content segments based on the search result. If two or more low sound pressure segments are detected by the low sound pressure segment searching unit 41, the non-program material scene extracting unit 32 judges whether adjacent low sound pressure segments are in a predetermined time frame, and extracts a continuous low sound pressure segment from the start of the first low sound pressure segment to the end of the last low sound pressure segment that the adjacent low sound pressure segments are present in the predetermined time frame as a non-program material scene.

## Description

### TECHNICAL FIELD

The present invention relates to a non-program material scene extracting device and a computer program thereof that extract non-program material scenes such as commercial scenes from a content including audio information.

### BACKGROUND ART

In recent years, some recording and playback devices used for recording and playing back contents (such as television broadcast programs) including video information and audio information are known to extract and play back commercial scenes only, or the provide playback by deleting commercial scenes from a program material. In Patent Document 1, for example, silent parts are detected from television signals, and if two or more silent parts are in a predetermined time interval (for example, 15 seconds), that part is extracted as a commercial scene.
[Patent Document 1] JP-A-8-317342

### DISCLOSURE OF THE INVENTION

### Subject to be Solved by the Invention

However, since a commercial scene extracting method disclosed in the Patent Document 1 extracts a part where silent parts appear at a predetermined time interval, there is a problem of not being able to apply for overseas broadcasting, BS broadcasting, and cable television, when commercial messages do not run at a predetermined time interval.

In view of the above-mentioned problems, an object of the present invention is to provide a non-program material scene extracting device and a computer program thereof that ensure extraction of a non-program material scene in a content.

### Means for Solving the Problem

A non-program material scene extracting device according to the present invention includes a content acquiring section acquiring a content including audio information, a low sound pressure segment (period) searching section searching all content segments along the time axis of the acquired content for a low sound pressure segment where a sound pressure level calculated based on the audio information is at or below a predetermined low sound threshold value, and a non-program material scene extracting section extracting a non-program material scene including a commercial scene from all content segments based on a search result of the low sound segment searching section. If two or more low sound pressure segments are detected by the low sound pressure segment searching section, the non-program material scene extracting section judges whether adjacent low sound pressure segments are in a predetermined time frame, and when the adjacent low sound pressure segments are in the predetermined time frame, extracts a continuous low sound pressure segment from the start of the first low sound pressure segment to the end of the last low sound pressure segment as a non-program material scene.

With this configuration, a low sound pressure segment where the sound pressure level is at or below a predetermined low sound threshold value is searched for, and when adjacent low sound pressure segments are in a predetermined time frame, a continuous low sound pressure segment from the start of the first low sound pressure segment to the end of the last low sound pressure segment is extracted as a non-program material scene. Accordingly, a commercial scene that does not run at a predetermined time interval can be extracted without fail as a non-program material scene in a content. In other words, even with overseas broadcasting, BS broadcasting, and cable television of which the length of commercial messages is often not fixed, one or more commercial scenes can be extracted as a non-program material scene, by setting a predetermined time frame according to the length of commercial time.

The "content" includes a content formed by video information and audio information (such as television programs), and a content only formed by audio information (such as music and radio programs). The "non-program material scene" indicates segments considered not to be a program material of a content, such as a commercial scene, a weather forecast, and a segment of a program. The "adjacent low sound pressure segments are in a predetermined time frame" indicates any one of the starts of adjacent low sound pressure segments, the ends of adjacent low sound pressure segments, the middle points of adjacent low sound pressure segments, from the start of a low sound pressure segment to the end of the next low sound pressure segment, and from the end of a low sound pressure segment to the start of the next low sound pressure segment.

It is preferable that the non-program material scene extracting device further include a high sound pressure segment (period) searching section searching a high sound pressure segment where a sound pressure level calculated based on the audio information is at or above a predetermined high sound threshold value from all content segments. Also, it is preferable that the non-program material scene extracting section judge whether a proportion of the segment length of the high sound pressure segment in the extracted continuous low sound pressure segment is at or above a predetermined proportion, based on search results of the low sound pressure segment searching section and the high sound pressure segment searching section. If judged to be at or above the predetermined proportion, the continuous low sound pressure segment is extracted as a non-program material scene.

With this configuration, a non-program material scene is extracted based on not only the searched low sound pressure segment, but also the high sound pressure segment. Accordingly, the non-program material scene can be extracted more properly. For example, if a non-program material scene is extracted based only on the low sound pressure segment, a scene with continuous low sound pressure segments in a program material, such as a quiet scene in a film, may also be extracted. By extracting only scenes of which the proportion of the high sound pressure segment in the continuous low sound pressure segment is at or above a predetermined proportion, such a scene in the program material will not be extracted. When a plurality of high sound pressure segments is included in the continuous low sound pressure segment, the "proportion of the segment length of the high sound pressure segment in the continuous low sound pressure segment" indicates a proportion of the total of the segment lengths of the high sound pressure segments.

It is preferable that the non-program material scene extracting device further include a predetermined value setting section setting at least one of the low sound threshold value, the high sound threshold value, the segment length of the predetermined time frame, and the value of the predetermined proportion.

With this configuration, the low sound threshold value that is referenced for searching a low sound pressure segment, the high sound threshold value that is referenced for searching a high sound pressure segment, the segment length of a predetermined time frame that is referenced for judging the continuous low sound pressure segment, and the value of the predetermined proportion that is referenced when judging whether the continuous low sound pressure segment is a non-program material scene can be set, depending on the preference and the needs of a viewer.

It is preferable that the non-program material scene extracting device further include a content recording section recording the acquired content, and the low sound pressure segment searching section and the high sound pressure segment searching section respectively search a low sound pressure segment and a high sound pressure segment, in synchronism with recording carried out by the content recording section.

With this configuration, a low sound pressure segment and a high sound pressure segment are searched in line with the recording of the content. Accordingly, when the recording is finished, the searching of the low sound pressure segment and the high sound pressure segment has already finished. As a result, compared to searching a low sound pressure segment and a high sound pressure segment after recording the content, the time required for extracting a non-program material scene can be reduced.

It is preferable that the non-program material scene extracting device further include a partial scene extracting section extracting a partial scene that is an element for creating a digest of the content, from a remaining part excluding the non-program material scene extracted by the non-program material scene extracting section from all content segments, and a digest creating section creating a digest by using the extracted partial scene.

With this configuration, a proper digest not including a non-program material scene such as a commercial scene can be created. The "digest" indicates summarized data in which what is in the content is summarized.

It is preferable that in the non-program material scene extracting device, the content include video information, and the non-program material scene extracting device further include a thumbnail image extracting section extracting a thumbnail image to create a thumbnail of the content, from a remaining part excluding the non-program material scene extracted by the non-program material scene extracting section from all content segments, and a thumbnail creating section creating the thumbnail by using the extracted thumbnail image.

With this configuration, a proper thumbnail not including a non-program material scene such as a commercial scene can be created. The "thumbnail" indicates a reduced image for facilitating rough understanding of what is in the content. The present invention may be applied for creating, not only a representative thumbnail, but also a plurality of thumbnails to be listed and displayed for facilitating understanding of what is in the entire content.

A computer program according to the present invention operates a computer as each section in the non-program material scene extracting device.

By using the computer program, the non-program material scene extracting device that ensures extraction of a non-program material scene in a content can be realized.

### BRIEF DESCRIPTION OF THE DRAWINGS

Fig. 1 is a block configuration diagram of a recording and playback device according to an embodiment of the present invention.
Fig. 2 is a diagram of a sound pressure level waveform for explaining an extraction method of a non-program material scene.
Fig. 3 is a flowchart showing a process of searching a low sound pressure segment.
Fig. 4 is a flowchart showing a process of extracting a non-program material scene.
Fig. 5 is a block configuration diagram of a recording and playback device according to an application of the present invention.
Fig. 6 is a diagram of a sound pressure level waveform for explaining an extraction method of a partial scene.
Fig. 7 is a diagram showing an example of usage of a digest and a thumbnail.

### Description of Reference Numerals

- 10: Recording and playback device
- 20: Content acquiring section
- 30: Control section
- 40: Audio analysis section
- 50: Storage section
- 60: Playback/displaying section
- 61: Content playback unit
- 62: Digest playback unit
- 63: Thumbnail displaying unit
- 81: Receiving antenna
- 82: External equipment
- 91: Display device
- 92: UI input device
- DHs: Start of a high sound pressure segment
- DHe: End of a high sound pressure segment
- DSs: Start of a low sound pressure segment
- DSe: End of a low sound pressure segment
- hl: Segment length of a high sound pressure segment
- sl: Segment length of a low sound pressure segment
- tp: Segment length of a partial scene
- T: Total of segment lengths
- THb: High sound threshold value
- THs: Low sound threshold value

### BEST MODES FOR CARRYING OUT THE INVENTION

Exemplary embodiments of a non-program material scene extracting device and a computer program thereof according to the present invention will be described in detail with reference to the accompanying drawings. The present invention has been made in view of extracting a non-program material scene such as a commercial scene, based on audio information included in a content. This is performed by at first searching a low sound pressure segment (period) where a sound pressure level is at or below a predetermined low sound threshold value, and extracting a continuous low sound pressure segments from the start of the first low sound pressure segment to the end of the last low sound pressure segment that any of adjacent low sound pressure segments are in a predetermined time frame, as a non-program material scene. An example of applying the non-program material scene extracting device according to the present invention to a recording and playback device for recording and playing back a content including video information and audio information will be explained.

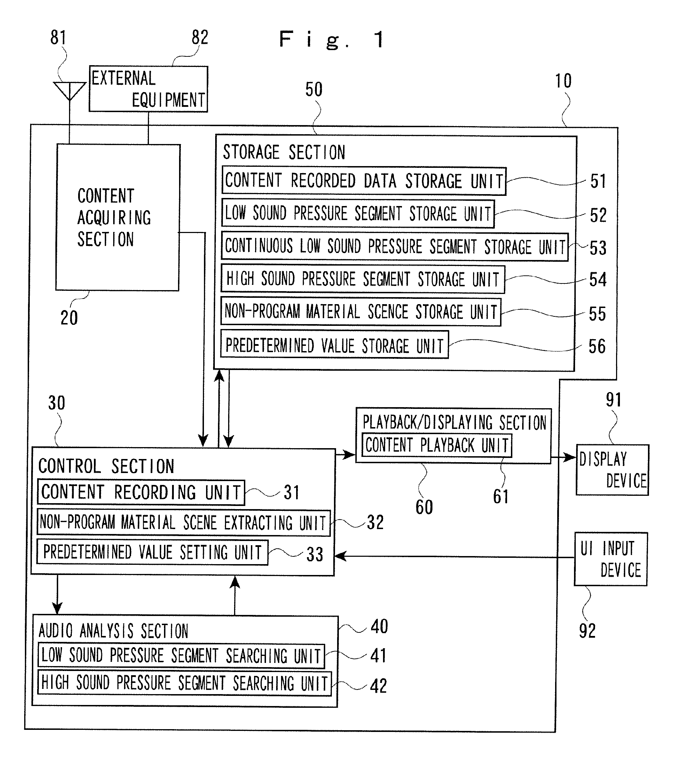

Fig. 1 is a block configuration diagram of a recording and playback device 10 according to an embodiment of the present invention. As shown in the diagram, the recording and playback device 10 includes a content acquiring section 20 for acquiring a content from outside, a control section 30 for carrying out various controls, an audio analysis section 40 for carrying out an analysis based on audio information, a storage section 50 for storing various information, and a playback/displaying section 60 for playing back and displaying broadcast contents and various information.

A main component of the content acquiring section 20 is a tuner to receive a television broadcast, such as terrestrial broadcast, BS, or CS, through a receiving antenna 81. To acquire a content from external equipment 82 (such as a television set, a personal computer, and various tuners that include an external output terminal), an external input terminal is the main component of the content acquiring section 20. Although not shown, the content acquiring section 20 can also acquire video/music data distributed via a communication network such as the Internet as a content. In this case, an Internet connection part becomes the main component. When various semiconductor memories or optical disk readers are installed as the content acquiring section 20, the content recorded therein can also be acquired.

The control section 30 carries out various controls by controlling each section of the recording and playback device 10. More specifically, the control section 30 includes a content recording unit 31 for recording an acquired content, a non-program material scene extracting unit 32 for extracting a non-program material scene from a content, and a predetermined value setting unit 33 for setting various predetermined values that are referenced when a non-program material scene is extracted. The "non-program material scene" indicates a segment (period) considered not to be a program material of the content, such as a commercial scene, a weather forecast, and a segment of a program.

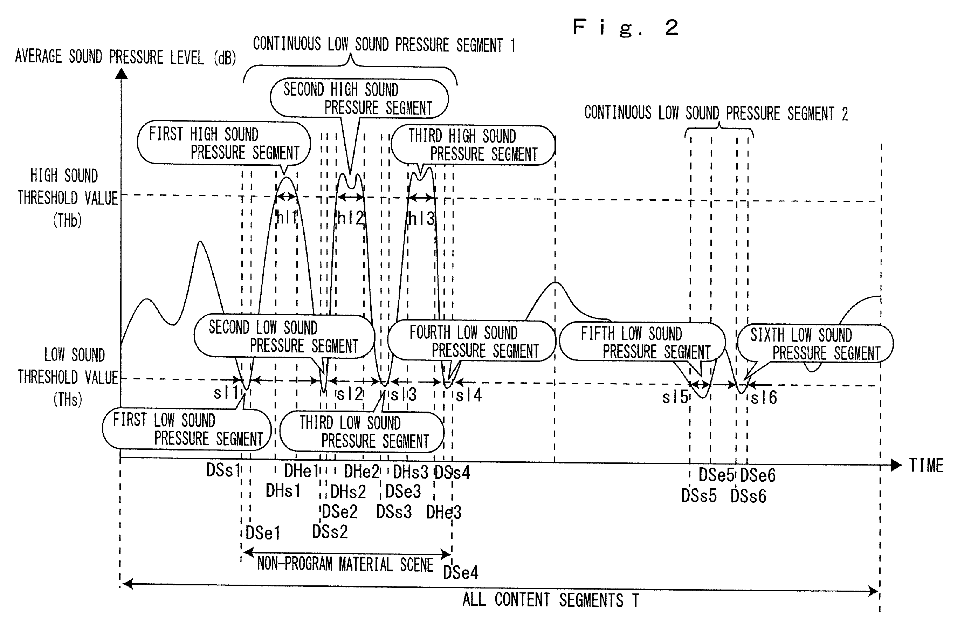

As will hereinafter be described in detail, the non-program material scene extracting unit 32 extracts a non-program material scene from all the content segments (corresponding to a recording time of the content), based on the search result of a low sound pressure segment searching unit 41 and a high sound pressure segment searching unit 42, which will be described later. In the predetermined value setting unit 33, each of the following values are set: two threshold values that are reference sound pressure levels for searching a low sound pressure segment and a high sound pressure segment (period) (see Fig. 2) by the two searching sections 41 and 42, a predetermined time frame for judging whether to integrate the adjacent low sound pressure segments as a continuous low sound pressure segment, and a predetermined proportion for judging whether the continuous low sound pressure segment is a non-program material scene.

The audio analysis section 40 analyzes audio information (audio waveform information) included in the content, calculates an average sound pressure level per unit of time (hereinafter, simply referred to as "sound pressure level"), and produces a sound pressure level waveform as shown in Fig. 2, for example. The audio analysis section 40 includes the low sound pressure segment searching unit 41 for searching a segment (hereinafter, referred to as "low sound pressure segment") where the average sound pressure level is at or below a predetermined threshold value (hereinafter, referred to as "low sound threshold value (THs)" from the content, and the high sound pressure segment searching unit 42 for searching a segment (hereinafter, referred to as "high sound pressure segment)" where the average sound pressure level is at or above a predetermined threshold value (hereinafter, referred to as "high sound threshold value (THb)" from the content. The low sound threshold value and the high sound threshold values are based on the value set by the predetermined value setting unit 33.

The storage section 50 includes a content recorded data storage unit 51 for storing recorded data of the content (hereinafter, referred to as "content recorded data") recorded by the content recording unit 31, a low sound pressure segment storage unit 52 for storing the search result of the low sound pressure segment searching unit 41, a continuous low sound pressure segment storage unit 53 for storing a continuous low sound pressure segment with two or more low sound pressure segments integrated, a high sound pressure segment storage unit 54 for storing the search result of the high sound pressure segment searching unit 41, a non-program material scene storage unit 55 for storing the non-program material scene extracted by the non-program material scene extracting unit 32, and a predetermined value storage unit 56 for storing various predetermined values set by the predetermined value setting unit 33. The storage section 50 can be formed by a hard disk, various semiconductor memories, various optical disks, and the like, and the type is not limited.

The playback/displaying section 60 includes a content playback unit 61 for playing back the recorded content. The content playback unit 61 plays back the content based on the content recorded data read out from the content recorded data storage unit 51 and displays the content on a display device 91.

A series of processes of the recording and playback device 10 formed as the above will now be explained with reference to an example of a sound pressure level waveform shown in Fig. 2. For example, when a user (viewer) instructs to record a content using a user interface (UI) input device 92 such as a remote controller, the recording and playback device 10 acquires the content via the content acquiring section 20 and records the acquired content by the content recording unit 31.

In synchronism with the recording of the content, the low sound pressure segment searching unit 41 and the high sound pressure segment searching unit 42 respectively search a low sound pressure segment and a high sound pressure segment. More specifically, the low sound pressure segment searching unit 41 searches a low sound pressure segment where the sound pressure level is at or below the low sound threshold value (THs) (see Fig. 2), and stores data containing the address of the start (DSs) of each low sound pressure segment and its segment length (sl) in the low sound pressure segment storage unit 52. The high sound pressure segment searching unit 42 searches a high sound pressure segment where the sound pressure level is at or above the high sound threshold value (THb) (see Fig. 2), and stores data containing the address of the start (DHs) of each high sound pressure segment and its segment length (hl) in the high sound pressure segment storage unit 54.

When the recording of the content is finished, the content recorded data will be stored in the content recorded data storage unit 51. Then, the non-program material scene extracting unit 32 extracts a continuous low sound pressure segment, based on the data stored in the low sound pressure segment storage unit 52. For example, as shown in Fig. 2, when six low sound pressure segments where the sound pressure level is at or below the low sound threshold value (THs) (first low sound pressure segment to sixth low sound pressure segment) are detected, with the adjacent low sound pressure segments (for example, first low sound pressure segment and second low sound pressure segment), when the length (time) from the end (DSe1) of the prior low sound pressure segment (first low sound pressure segment) to the start (DSs2) of the next low sound pressure segment (second low sound pressure segment) is within a predetermined time frame Pt, from the start (DSs1) of the prior low sound pressure segment (first low sound pressure segment) to the end (DSe2) of the next low sound pressure segment (second low sound pressure segment) will be integrated. Further, when the length from the end (DSe2) of the next low sound pressure segment (second low sound pressure segment) to the start (DSs3) of the adjacent low sound pressure segment (third low sound pressure segment) is within the predetermined time frame Pt, from the start (DSs1) of the prior low sound pressure segment (first low sound pressure segment) to the end (DSe3) of the next-but-one low sound pressure segment (third low sound pressure segment) will be integrated. Although not shown, the length of the predetermined time frame Pt is equal to or more than each segment of DSe1 to DSs2, DSe2 to DSs3, DSe3 to DSs4, and DSe5 to DSs6, and shorter than a segment of DSe4 to DSs5.

In this manner, when adjacent low sound pressure segments are present within a predetermined time frame, the segments are integrated one after another, and from the start of the first low sound pressure segment to the end of the last low sound pressure segment is extracted as a continuous low sound pressure segment. In other words, in the case of the example in Fig. 2, because the length from the end (DSe4) of the fourth low sound pressure segment to the start (DSs5) of the fifth low sound pressure segment exceeds the predetermined time frame Pt, from the start (DSs1) of the first low sound pressure segment to the end (DSe4) of the fourth low sound pressure segment will be extracted as the first continuous low sound pressure segment (continuous low sound pressure segment 1).

Similarly, because the length from the end (DSe5) of the fifth low sound pressure segment to the start (DSs6) of the sixth low sound pressure segment is equal to or less than the predetermined time frame Pt, from the start (DSs5) of the fifth low sound pressure segment to the end (DSe6) of the sixth low sound pressure segment will be extracted as the second continuous low sound pressure segment (continuous low sound pressure segment 2). The data containing the address of the start of the extracted continuous low sound pressure segment and its segment length will be stored in the continuous low sound pressure segment storage unit 53.

The non-program material scene extracting unit 32 then judges whether the extracted two continuous low sound pressure segments correspond to a non-program material scene, based on the data stored in the high sound pressure segment storage unit 54. In general, commercial messages and advertisement spots in a program have increased sound pressure levels for a long period of time because background music and sound effects are often used. On the other hand, in quiet scenes in films and dramas, the sound pressure level seldom rises. Therefore, the proportion of the segment length of the high sound pressure segment in the extracted continuous low sound pressure segment (when a plurality of high sound pressure segments are included in the continuous low sound pressure segment, the proportion of the total of the segment lengths of the high sound pressure segments) is calculated. When the proportion is equal to or more than a predetermined proportion γ (γ is a value of 0<γ<1, set at 0.5 in the present embodiment), the continuous low sound pressure segment is extracted as a non-program material scene.

Therefore, in the case of the example of the continuous low sound pressure segment 1 in Fig. 2, the total (h11 + h12 + h13) of the segment lengths of the three high sound pressure segments included in the continuous low sound pressure segment is more than a half of the segment length (DSs1 to DSe4) of the continuous low sound pressure segment 1. Accordingly, the continuous low sound pressure segment 1 is extracted as a non-program material scene. The data that contains the address of the start of the extracted non-program material scene and its segment length will be stored in the non-program material scene storage unit 55. In the case of the other continuous low sound pressure segment 2, because a high sound pressure segment is not included in the continuous low sound pressure segment, the continuous low sound pressure segment 2 is judged not to be a non-program material scene.

The result extracted by the non-program material scene extracting unit 32 is used for creating a digest and a thumbnail of the content. Because these are often played back and displayed to grasp what is in the content, a non-program material scene such as a commercial scene is preferably not included. A method of creating a digest and a thumbnail using extracted scenes and cuts only from a program material will be explained later as an application.

The user can set and modify the low sound threshold value (THs), the high sound threshold value (THb), the segment length Pt of the predetermined time frame, and the value of the predetermined proportion γ (0<γ<1) by using the UI input device 92 (predetermined value setting unit 33). The values being set are stored in the predetermined value storage unit 56, and are referenced during a search process by the low sound pressure segment searching unit 41 or the high sound pressure segment searching unit 42, or during an extraction process by the non-program material scene extracting unit 32. However, if these are not particularly set by a user, default setting values will be used for all.

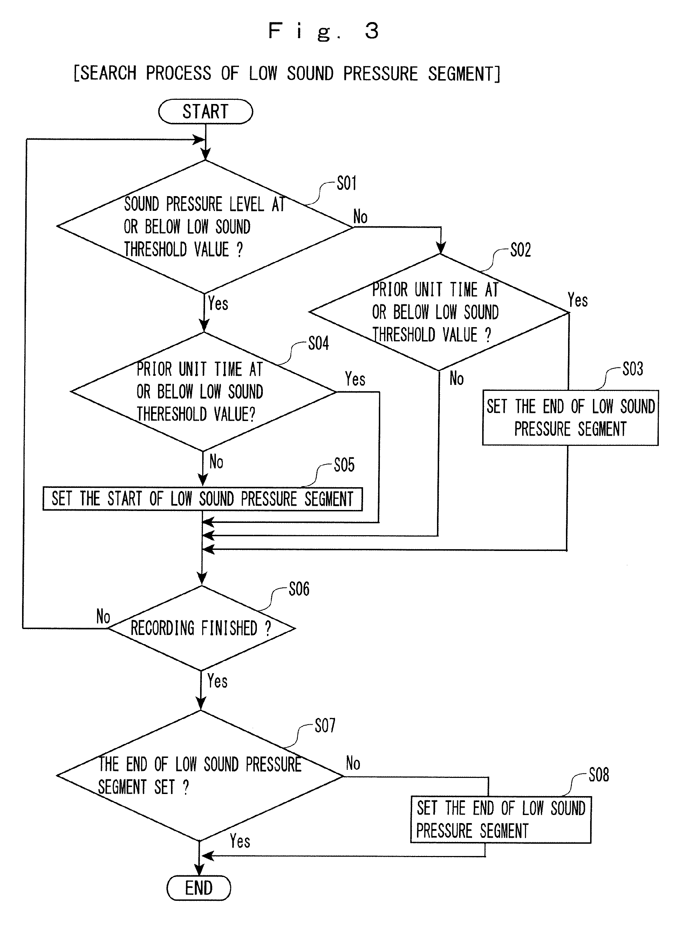

A search process of a low sound pressure segment by the low sound pressure segment searching unit 41 will now be explained with reference to a flowchart in Fig. 3. The process will be executed at per unit time (for example, every 1/60 seconds) in synchronism with recording of a content. As shown in the flowchart, whether the sound pressure level at per unit time is at or below the low sound threshold value being set will be judged (S01). If it is not at or below the low sound threshold value (S01:No), whether the prior unit time was at or below the low sound threshold value will be judged (S02). If it was at or below the low sound threshold value (S02:Yes), the end of the low sound pressure segment will be set (S03).

If the sound pressure level of the unit time to be searched at this time is judged to be at or below the low sound threshold value at S01 (S01:Yes), whether the prior unit time was also at or below the low sound threshold value will be judged (S04). If it was not at or below the low sound threshold value (S04: No), the start of the low sound pressure segment will be set (S05).

After setting the start or the end of the low sound pressure segment, or if the prior unit time is judged to be at or below the low sound threshold value at S04 (S04:Yes), or if the prior unit time is judged not at or below the low sound threshold value at S02 (S02:No), whether the recording of the content has finished will be judged (S06). If it has not finished (S06:No), the above processes will be repeated.

If the recording has finished (S06:Yes), whether the end of the low sound pressure segment is set is judged, if the start of the low sound pressure segment is set at S05 (S07). If it is not set (S07:No), the end of the low sound pressure segment will be set (S08), thereby finishing the process. In other words, if the recording is finished before setting the end of the low sound pressure segment, the end is set before finishing the process.

The above shows the search process by the low sound pressure segment searching unit 41. The process by the high sound pressure segment searching unit 42 corresponds to a process in which the "low sound pressure segment" is replaced with the "high sound pressure segment" and "at or below the low sound threshold value" with "at or above the high sound threshold value" in the search process of the low sound pressure segment. In other words, because the substantial contents of the processes are the same, detailed description thereof will be omitted.

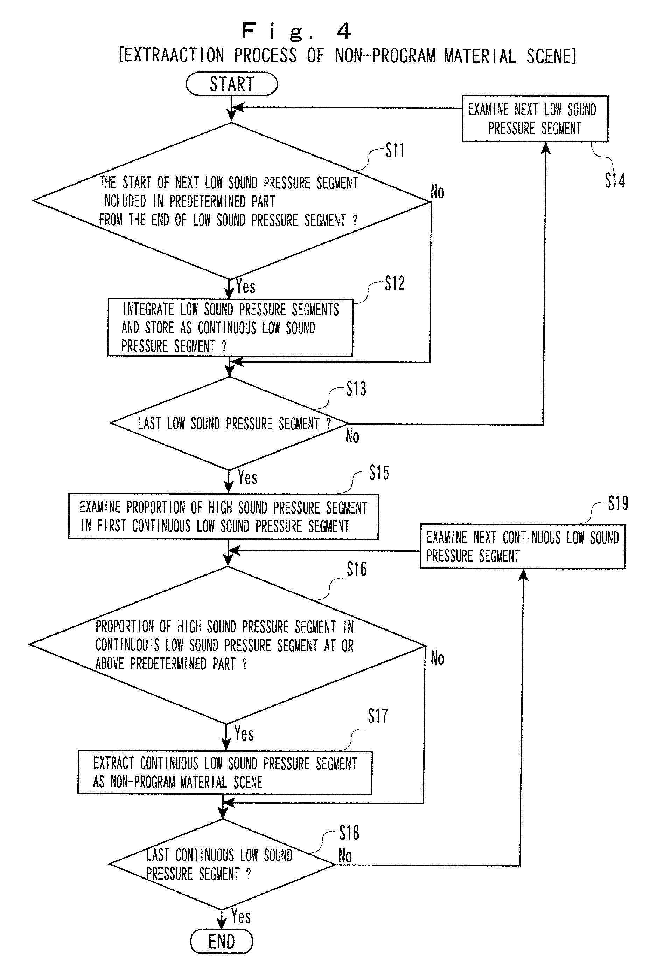

An extraction process of a non-program material scene of the present embodiment by the non-program material scene extracting unit 36 will now be explained with reference to a flowchart in Fig. 4. The extraction process of a non-program material scene is executed, if two or more low sound pressure segments are detected from the result of the search process of the low sound pressure segment shown in Fig. 3. The process is triggered when the recording of the content finishes.

Based on the result of the search process of the low sound pressure segment shown in Fig. 3, whether the start of the next low sound pressure segment (for example, the second low sound pressure segment) is included in a predetermined time frame from the end of the first low sound pressure segment (for example, the first low sound pressure segment) will be judged (S11). If it is included (S11:Yes), the two low sound pressure segments are integrated and stored in the continuous low sound pressure segment storage unit 53 (see Fig. 1) as a continuous low sound pressure segment (S12). Then, whether it is the last low sound pressure segment (in the example of Fig. 2, the sixth low sound pressure segment) in all the content segments will be judged (S13). If it is not the last one (S13:No), the next low sound pressure segment (for example, the third low sound pressure segment) will be examined (S14).

When this low sound pressure segment (third low sound pressure segment) is also judged to be in a predetermined time frame from the prior low sound pressure segment (second low sound pressure segment) (S11:Yes), the stored continuous low sound pressure segment and the third low sound pressure segment are integrated. Then, up to the end of the third low sound pressure segment is re-stored as a continuous low sound pressure segment (S12). In other words, if the next low sound pressure segment is judged to be in a predetermined time frame at S11 (S11:Yes), the data containing the segment length of the continuous low sound segment stored in the continuous low sound pressure segment storage unit 53 will be updated as the occasion demands.

When it is judged to be the last low sound pressure segment at S13, in other words, when the examination of all the low sound pressure segments are finished (S13:Yes), a proportion of the high sound pressure segment is examined from the first continuous low sound pressure segment stored in the continuous low sound pressure segment storage unit 53 (S15).

When the proportion (proportion of the total of the segment lengths of the high sound pressure segments in the continuous low sound pressure segment) of the high sound pressure segment in the continuous low sound pressure segment is judged to be equal to or more than the predetermined proportion γ (S16:Yes), the continuous low sound pressure segment is extracted as a non-program material scene (S17). The data that contains the address of the start of the extracted non-program material scene and its segment length is stored in the non-program material scene storage unit 55 (see Fig. 1), and used for a digest creation process or a thumbnail creation process afterwards.

Then, whether the continuous low sound pressure segment being examined is the last continuous low sound pressure segment (in the example in Fig. 2, the continuous low sound pressure segment 2) will be judged (S18). If it is not the last one (S18:No), the next continuous low sound pressure segment will be examined (S19). If it is the last one, in other words, when the examination of all the continuous low sound pressure segments has finished (S18:Yes), the process is finished.

As the above, according to the present embodiment, the low sound pressure segment where the sound pressure level is at or below the low sound threshold value is searched for, and the continuous low sound pressure segment from the start of the first low sound pressure segment to the end of the last low sound pressure segment that the adjacent low sound pressure segments are in a predetermined time frame is extracted as a candidate for a non-program material scene. Accordingly, even a commercial scene that does not run at a predetermined time interval can be extracted as a non-program material scene in the content. Therefore, even with a case of overseas broadcasting, BS broadcasting, and cable television of which the length of the commercial message is often not fixed, a non-program material scene can be extracted without fail.

Because only a scene whose proportion of the high sound pressure segment in the extracted continuous low sound pressure segment is equal to or more than a predetermined proportion is extracted as a non-program material scene, scenes in which the low sound pressure segments continue in a program material, for example, a quiet scene in a film, will not be extracted by mistake.

Because the low sound pressure segment and the high sound pressure segment are searched with the recording of the content, when the recording is finished, the searching of the low sound pressure segment and the high sound pressure segment has already finished. Accordingly, there is no need to read out the content again for searching the low sound pressure segment and the high sound pressure segment, after recording the content. As a result, the time required for creating a digest can be reduced.

In the above example, a scene whose proportion of the segment length of the high sound pressure segment in the extracted continuous low sound pressure segment is equal to or more than the predetermined proportion γ (0<γ<1) is extracted as a non-program material scene. However, all the extracted continuous low sound pressure segments may be extracted as non-program material scenes. In other words, in the extraction process of the non-program material scene shown in the flowchart in Fig. 4, the process subsequent to S16 may be omitted, thereby considering the continuous low sound pressure segment as a non-program material scene. In this configuration, there is a possibility that a quiet scene included in a program material may be extracted as a non-program material scene (in the example in Fig. 2, the continuous low sound pressure segment 2 may be judged as a non-program material scene). However, the control of the extraction process can be simplified accordingly.

In the above example, while small segments are integrated, when the end of the prior low sound pressure segment to the start of the next low sound pressure segment is within the predetermined time frame P, the two small segments may be integrated when the starts of the adjacent low sound pressure segments are within the predetermined time frame Pt. Also, it may be judged by any of the ends of the adjacent low sound pressure segments, the middle points of the adjacent low sound pressure segments, or the start of the prior low sound pressure segment to the end of the next sound pressure segment.

While in the above example, a non-program material scene is extracted based on audio information, other various commercial message detection methods that have been developed may also be used together to extract a non-program material scene. In other words, a non-program material scene may be extracted by considering a change of scenes based on video information or a broadcasting mode (whether a bilingual broadcast, whether a stereo broadcast, and the like).

While in the above example, the data of the address of the start and the segment length of each segment, such as the low sound pressure segment, the continuous low sound pressure segment, and the high sound pressure segment, are stored, the address of the start and the end of each segment may be stored instead.

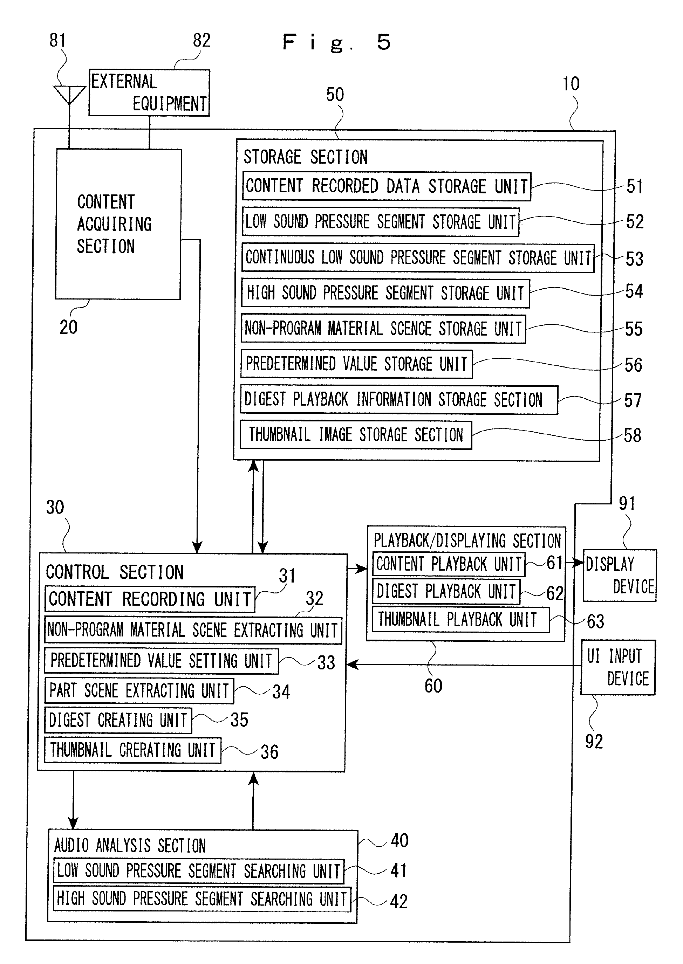

An application of the present invention will now be explained with reference to Figs. 5 through 7. A method of creating a digest or a thumbnail by using the above-mentioned extraction process of a non-program material scene will be explained here. The "digest" indicates summarized information in which what is in the content is summarized. The "thumbnail" indicates a reduced screen for rough understanding of what is in the content.

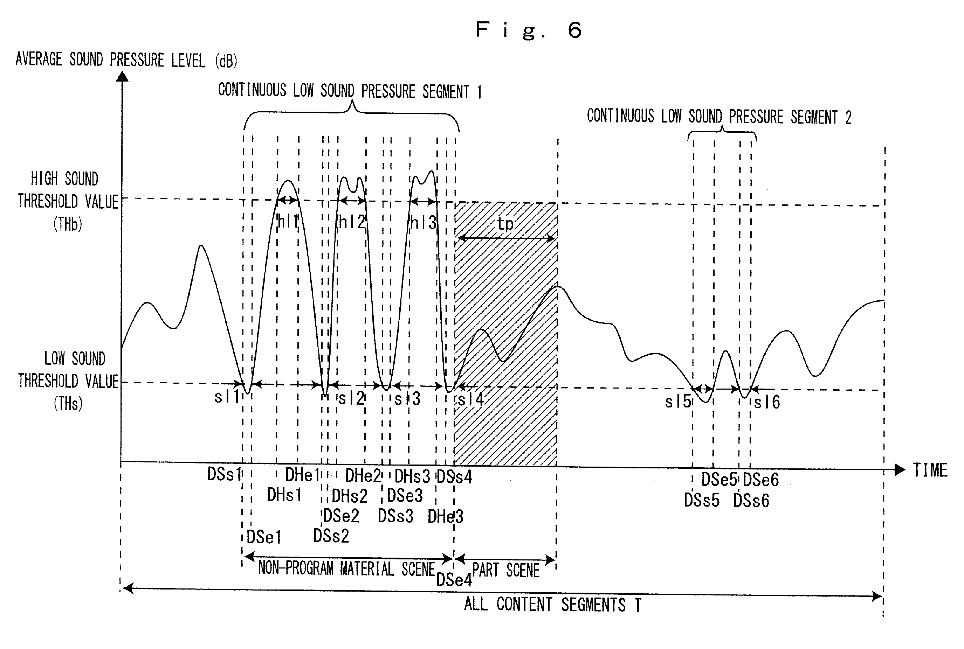

Fig. 5 is a block configuration diagram according to the present application. Fig. 6 shows a sound pressure level waveform as an example for explaining the present application.

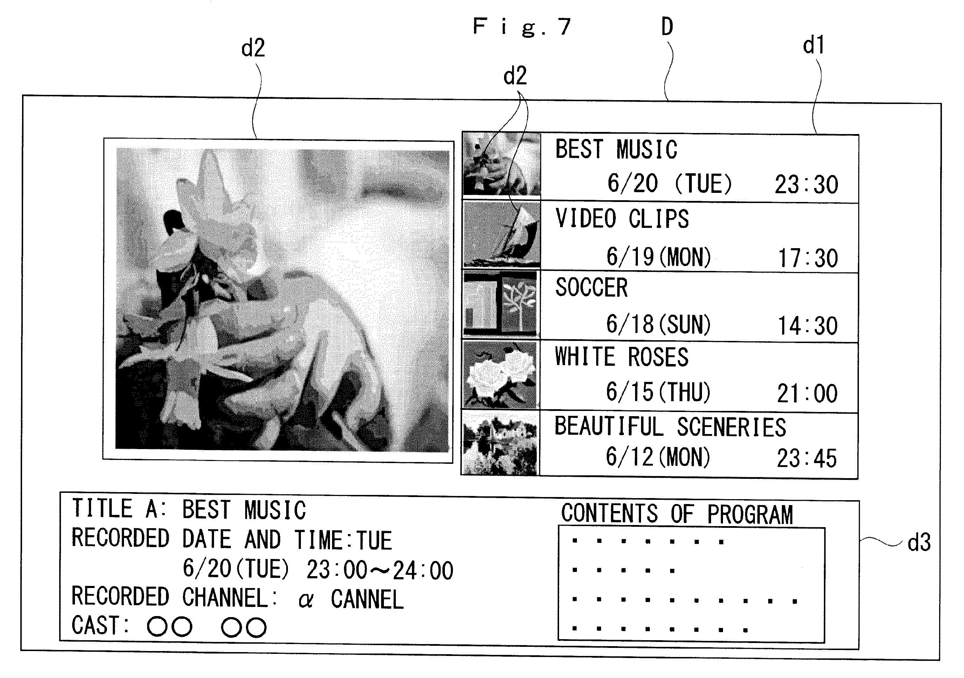

Fig. 7 shows an example of usage of a digest and a thumbnail being created.

As shown in Fig. 5, the recording and playback device 10 according to the present application is different from the block configuration diagram of the first embodiment in the following sense. The control section 30 includes a partial scene extracting unit 34 for extracting a partial scene that is an element for creating a digest from the content, a digest creating unit 35 for creating digest playback information to play back the digest, and a thumbnail creating unit 36 for creating a thumbnail image to display as a thumbnail. The storage section 50 includes a digest playback information storage unit 57 for storing the digest playback information, and a thumbnail image storage unit 58 for storing the thumbnail image. The playback/displaying section 60 includes a digest playback unit 62 for playing back the digest, and a thumbnail displaying unit 63 for displaying the thumbnail.

The partial scene extracting unit 34, as shown in Fig. 6, extracts a predetermined time frame (segment length: tp, indicated by dashed lines in the diagram) immediately after a non-program material scene, as one scene (partial scene) to be included in the digest. This is because, for example, when the content is a cartoon program, a title and a subtitle of the cartoon are often displayed immediately after commercial messages. By including these in the digest, a user can grasp the contents more accurately.

The digest creating unit 35 creates digest playback information for playing back the digest, based on the extracted partial scene. Created as the digest playback information is segment data containing the address of the start of the extracted partial scene (corresponding to the end of the non-program material scene (in the example of Fig. 6, DSe4)) and its segment length tp. The created digest playback information is stored in the digest playback information storage unit 57. The user can set a suitable value of the segment length tp.

When a plurality of partial scenes are extracted from one content, the arranging sequence is decided according to a chronological order. In other words, when a program is recorded from 0 o'clock to 1 o'clock and commercial messages run every 15 minutes (when a non-program material scene is extracted), the partial scene immediately after the commercial message at around 0:15 will be arranged at first, and the partial scene immediately after the commercial message at around 0:30 will be arranged at second. If the whole extracted partial scenes do not fit within the total length (for example, 20 seconds) of the digest being set in advance, the partial scene will be deleted at the point when the total length of the partial scenes being arranged exceeds the total length of the digest. If partial scenes still remain, they will also be deleted at the same time. In other words, in the digest playback information in this case, the segment data that contains the address of the start of the deleted partial scene and its segment length will not be included.

The thumbnail creating unit 36 creates a thumbnail image by reading out the first cut (frame) of the extracted partial scene. The created thumbnail scene will be stored in the thumbnail image storage unit 58.

The digest playback unit 62 plays back a digest by reading out the partial scene that corresponds to the digest playback information (formed by data of one or more segments (data containing the address of the start of the partial scene and its segment length)) stored in the digest playback information storage unit 57, from the content recorded data stored in the content recorded data storage unit 51. The thumbnail displaying unit 63 reads out the thumbnail image stored in the thumbnail image storage unit 58 and displays the image on the display device 91 as a representative thumbnail of the content.

An example of playback of a digest by the digest playback unit 62 and display of a thumbnail by the thumbnail displaying unit 63 will now be explained with reference to Fig. 7. A screen D shown in the diagram is a graphical user interface (GUI) used by a user for searching a plurality of contents being stored.

The screen D includes a list displaying area d1 for displaying a list of a content, a digest displaying area d2 for displaying a digest of the content selected from the list, and a detailed information displaying area d3 for displaying detailed information of the selected content. A part of the list displaying area d1 serves as a thumbnail displaying area d11 for displaying a representative thumbnail of each of the content.

At the state immediately after the screen D is displayed, a representative thumbnail and a title name are displayed on the list displaying area d1, and the title displayed on the top of the list is being selected (in the example of the diagram, "Best Music"). Therefore, the digest of "Best Music" is displayed on the digest displaying area d2, and detailed information (program name, recorded date and time, recorded channel, cast, contents of the program, and the like) of "Best Music" is displayed on the detailed information displaying area d3. In this state, when a user instructs to play back, the playback of the content of "Best Music" will start. Also in this state, when a user instructs to delete, the recorded data (content) of "Best Music" will be deleted.

In this manner, when a user searches for the content to play back or the content to delete, by playing back and displaying a digest and a thumbnail that the non-program material scene such as a commercial scene is eliminated without fail, the user can accurately grasp what is in the content in a short time. As a result, an operation of playback and deletion can be carried out efficiently.

The playback of the digest is carried out by reading out a partial scene that corresponds to the digest playback information from the content recorded data. Accordingly, there is no need to create data for a digest that a part of the content recorded data is extracted and then save the created data separately from the content recorded data. Therefore, a memory for saving the digest (digest playback information storage unit 57) only requires a capacity for saving the digest playback information.

In the above example, a representative thumbnail image is created by the thumbnail creating unit 36. However, it may also be applied for creating a plurality of thumbnails to be displayed and listed to grasp the contents of all the contents. Also, the plurality of thumbnails may be displayed in slides on the thumbnail displaying area d11. The cut for a thumbnail may not be extracted from the partial, but the cut for the thumbnail may be extracted suitably from the segment other than the non-program material scene.

Also, each section, unit, and function included in the recorded data playback device 10 according to in each of the embodiments can be provided as a program. The program can also be stored and provided in a recording medium (not shown). Examples of such recording medium include: a CD-ROM, a flash ROM, a memory card (a compact flash (trade mark), a smart media, a memory stick, and the like), a compact disk, a magneto-optical disk, a digital versatile disk, a flexible disk, and a hard disk.

The device configuration, the processing steps, and the like may not be limited to the above-described embodiments, but may be modified suitably within the spirit and scope of the present invention. The non-program material scene extracting function of the present invention may be installed on a video recorder, a DVD recorder, a personal computer, and the like, other than the recording and playback device 10.

## Claims

1. A non-program material scene extracting device comprising:
a content acquiring section acquiring a content including audio information;
a low sound pressure segment searching section searching all content segments along a time axis of the acquired content for a low sound pressure segment where a sound pressure level calculated based on the audio information is at or below a predetermined low sound threshold value; and
a non-program material scene extracting section extracting a non-program material scene including a commercial scene from all content segments based on a search result of the low sound segment searching section, the non-program material scene extracting section judging, if two or more low sound pressure segments are detected by the low sound pressure segment searching section, whether adjacent low sound pressure segments are in a predetermined time frame, and when the adjacent low sound pressure segments are in the predetermined time frame, extracting a continuous low sound pressure segment from start of a first low sound pressure segment to end of a last low sound pressure segment as a non-program material scene.

2. The non-program material scene extracting device according to claim 1, further comprising:
a high sound pressure segment searching section searching a high sound pressure segment where a sound pressure level calculated based on the audio information is at or above a predetermined high sound threshold value from all content segment;
wherein the non-program material scene extracting section judges whether a proportion of a segment length of the high sound pressure segment in the extracted continuous low sound pressure segment is at or above a predetermined proportion, based on search results of the low sound pressure segment searching section and a high sound pressure segment searching section, and when judged to be at or above the predetermined proportion, the continuous low sound pressure segment is extracted as a non-program material scene.

3. The non-program material scene extracting device according to claim 2, further comprising:
a predetermined value setting section setting at least one of the low sound threshold value, the high sound threshold value, the segment length of the predetermined time frame, and the value of the predetermined proportion.

4. The non-program material scene extracting device according to claim 2, further comprising:
a content recording section recording the acquired content;
wherein the low sound pressure segment searching section and the high sound pressure segment searching section synchronizes with the recording of the content recording section and respectively search the low sound pressure segment and the high sound pressure segment.

5. The non-program material scene extracting device according to claim 1, further comprising:
a partial scene extracting section extracting a partial scene that is an element to create a digest of the content, from a remaining part excluding the non-program material scene extracted by the non-program material scene extracting section from all content segments; and
a digest creating section creating a digest by using the extracted partial scene.

6. The non-program material scene extracting device according to claim 1 in which the content includes video information, the device further comprising:
a thumbnail image extracting section extracting a thumbnail image to create a thumbnail of the content, from a remaining part excluding the non-program material scene extracted by the non-program material scene extracting section from all content segments; and
a thumbnail creating section creating the thumbnail by using the extracted thumbnail image.

7. A computer program for operating a computer as each section in the non-program material scene extracting device according to any one of claims 1 to 6.
